# EUROPÄISCHE PATENTSCHRIFT

(11) **EP 3 210 752 B1**
(45) Veröffentlichungstag und Bekanntmachung des Hinweises auf die Patenterteilung: **11.09.2019**
(21) Anmeldenummer: 16157824.0
(22) Anmeldetag: 29.02.2016
(51) Int. Cl.: B29C 53/58, F16F 15/305

(54) **GESCHNITTENER ROTATIONSKÖRPER UND VERFAHREN ZUR HERSTELLUNG EINES ROTATIONSKÖRPERS**
TRIMMED ROTATING BODY AND MANUFACTURING METHOD OF THE TRIMMED ROTATING BODY
CORPS ROTATIF TRONQUÉ ET METHODE DE FABRICATION DU CORPS ROTATIF TRONQUÉ

(43) Veröffentlichungstag der Anmeldung: 30.08.2017
(73) Patentinhaber: Enrichment Technology Company Ltd. Zweigniederlassung Deutschland, 52409 Jülich (DE)
(72) Erfinder: Sonnen, Michael, 47259 Duisburg (DE); Otremba, Frank, 52223 Stolberg (DE)
(74) Vertreter: FARAGO Patentanwälte

(56) Entgegenhaltungen:
- EP-A1- 0 391 222
- EP-A1- 1 191 253
- US-A- 5 601 522
- US-A- 5 628 232
- US-A1- 2010 018 344

## Beschreibung

### Gebiet der Erfindung

Die Erfindung betrifft einen Rotationskörper, einen Rotor mit einem solchen Rotationskörper, einen Schwungradenergiespeicher mit mindestens einem solchen Rotor und ein Verfahren zur Herstellung dieses Rotationskörpers.

### Hintergrund der Erfindung

Sich schnell um eine Drehachse (Rotationsachse) drehende Bauteile (Rotationskörper), beispielsweise zylinderförmige Rotoren, werden in vielzähligen Anwendungen verwendet. Kommt es bei den jeweiligen Anwendungen auf eine hohe mechanische Robustheit an, werden diese Bauteile bevorzugt teilweise oder vollständig aus Faserverbundmaterialien (Fasermaterial eingebettet ein einem die einzelnen Fasern miteinander verbindenden Matrixmaterial) hergestellt, die aufgrund ihrer vorteilhaften Materialeigenschaften wie beispielsweise eine hohe Zugfestigkeit und geringe Dichte stark gegenüber anderen Materialien bevorzugt werden.

Diese Bauteile werden üblicherweise mittels eines Wickelverfahrens aus Faserverbundmaterialien hergestellt. Um Fasern nicht nur in Umfangsrichtung ablegen zu können bedarf es jeweils einer Wendezone seitlich des Wickelkörpers, z.B. eine Polkappe oder Wickeldom, der eine einfache Umkehr der Faserwickelrichtung während eines kontinuierlichen Wickelprozesses erlaubt, indem der Wickeldom mit überwickelt wird. Nach Beendigung des Wickelprozesses wird das in der Wendezone abgelegte Material vom Wickelkörper abgetrennt. Produktionstechnisch ist es in der Regel vorteilhaft, mittels eines solchen Wickelverfahrens eine in Drehachse gesehen längere Komponente (Grundkörper) herzustellen, aus der das oder die Bauteile auf ihre vorgesehene Länge abgeschnitten (bzw. abgelängt) werden. Dadurch können gegebenenfalls mehrere Bauteile aus einem einzigen Wickelprozess gewonnen werden. Dadurch wird lediglich eine einzige Wickelmaschine für die Herstellung mehrerer Bauteile benötigt und die gewünschte Länge der Bauteile kann im Nachhinein durch entsprechendes Abschneiden der gewünschten Länge nach Wunsch variiert werden.

US 5 628 232 offenbart einen Schwungradrotor, der in einem Schwungrad-Energiespeichersystem verwendet wird, das eine hohe Energiespeicherkapazität aufweist, während er ein großes Volumen für einen Hochleistungs-Motorgenerator in seiner Umhüllung bereitstellt. Der Schwungradrotor weist einen äußeren, hauptsächlich zylindrischen Körper mit konisch verjüngten Endabschnitten, einen konischen Nabenabschnitt befestigt am äußeren Körper, und einen relativ kurzen inneren Zylinder auf, wobei der Zylinder die Welle mit dem inneren Abschnitt des konischen Nabenabschnitts verbindet. In einem beispielhaften Fall sind die einzelnen Komponenten vorwiegend aus mit Filamenten gewickelten Faserverbundwerkstoffen aufgebaut, während die Materialauswahl sowohl durch Kosten als auch durch Leistung bestimmt ist. Gemäß einem Aspekt des Rotors kann der innere Teil des inneren Zylinders ein geschlitzter Aluminiumzylinder sein.

Durch das Abschneiden entstehen allerdings an den jeweiligen Enden des Bauteils Schneidflächen, in denen die vormals durchgehenden Fasern des Faserverbundmaterials durchtrennt sind. Die freien Faserenden in den Schneidflächen sind zwar im ruhenden Zustand des Bauteils mittels des Matrixmaterials noch wie vorgesehen miteinander verbunden, allerdings können durch den Schneidprozess Mikrorisse auftreten. Es kommt an den Faserenden im rotierenden Betrieb aufgrund der Fliehkräfte zu Schubspannungen, welche zu lokaler Delamination der Fasern und zum Wachsen von Mikrorissen im Bereich der Schneidflächen führen können. Diese Belastungen sind umso größer, je schneller das Bauteil im Betrieb rotiert. Verstärkt wird diese Problematik durch eine Welligkeit der Umfangslagen im gewickelten Faserverbundmaterial. Hier wird beim Schneiden des Bauteils auf die gewünschte Länge möglicherweise durch eine wellige Faserlage geschnitten, so dass dadurch Faserabschnitte entstehen können, die zu beiden Seiten hin nicht mehr mit den restlichen Fasern verbunden sind. Diese abgetrennten Faserabschnitte brechen bei Belastung des Bauteils aufgrund seiner Rotation aus dem Verbund aus. Die durch Delamination oder Ausbruch abgelösten Teile des Faserverbundmaterials können gerade bei schnelldrehenden Bauteilen zu Beschädigungen des rotierenden Bauteils, der entsprechenden Lager für das Bauteil oder der Umkapselung des Bauteils führen, was nach Möglichkeit zu vermeiden ist.

Es wäre daher wünschenswert, ein Bauteil bereitstellen zu können, das weiterhin mittels Abschneiden bearbeitet werden kann und bei dem das Risiko einer Beschädigung des Bauteils oder der umgebenden Komponenten durch im rotierenden Betrieb abgelöste Faserverbundmaterialien deutlich verringert wird.

### Zusammenfassung der Erfindung

Es ist daher eine Aufgabe der Erfindung, ein Bauteil bereitzustellen, das weiterhin mittels Abschneiden bearbeitet werden kann und bei dem das Risiko einer
Beschädigung des Bauteils oder der umgebenden Komponenten durch im rotierenden Betrieb abgelöste Faserverbundmaterialien deutlich verringert wird.

Diese Aufgabe wird gelöst durch einen Rotationskörper umfassend einen zumindest teilweise aus Faserverbundmaterial gewickelten hohlförmigen ersten Körper mit einem ersten und zweiten Ende und mit einer zur vorgesehenen Rotationsachse hin gerichteten Innenseite und einer entgegengesetzten Außenseite, wobei sich der erste Körper zumindest in einem Schneidbereich angrenzend zumindest an einem der ersten oder zweiten Enden entlang einer Schneidfläche von der Außenseite zur Innenseite hin verjüngt, und einen aus einem zweiten Faserverbundmaterial gewickelten zweiten Körper aus einer Umfangslage aus Fasern mit einer Faserrichtung entlang eines Faserwinkels mit mehr als 80 Grad zur vorgesehenen Rotationsachse die so auf den ersten Körper gewickelt sind, dass der zweite Körper zumindest alle Schneidbereiche der Außenseite des ersten Körper zumindest senkrecht zur Rotationsachse gesehen überdeckt, ohne selber durch einen Schneidprozess abgelängt zu werden.

Wobei der erfindungsgemäße Rotationskörper dadurch gekennzeichnet ist, dass der erste Körper (2) eine zusätzliche in Richtung der Schneidfläche (24) verlaufende innere Schneidfläche (25) aufweist, wobei die Schneidflächen (24, 25) an einer Berührungskante (26) zusammenstoßen und wobei die innere Schneidfläche (25) nicht von dem zweiten Körper (3) überwickelt ist.

Als Rotationskörper werden alle Bauteile beziehungsweise Körper bezeichnet, die in der jeweiligen Anwendung rotieren. Da der erste Körper mit einem Wickelverfahren hergestellt wird, entsteht der erste Körper aus dem gewickelten Fasermaterial um einen Wickelkörper herum, der nach Fertigstellung des ersten Körpers entfernt werden kann. Somit ist in einer Ausführungsform der erste Körper ein Hohlkörper, dessen innere Form durch den Wickelkörper bestimmt wird. In einer Ausführungsform ist der hohlförmige erste Körper ein Hohlzylinder mit einer Zylinderinnenseite als die Innenseite und einer Zylinderaußenseite als die Außenseite. Die Zylinderachse entspricht der vorgesehenen Rotationsachse eines solchen Rotationskörpers. Da der zweite Körper durch Überwickeln des ersten Körpers gebildet wird, setzt sich die Form des ersten Körpers nach außen im zweiten Körper entsprechend fort.

Ein Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Dadurch entsteht eine Faserschicht, auf die die Fasern in weiteren Faserschichten gewickelt werden, bis das Faserverbundmaterial die gewünschte Dicke besitzt. Ein Paket aus ein oder mehreren Faserschichten aus einem Faserverbundmaterial wird hier als Faserlage bezeichnet. Dabei kann das Faserverbundmaterial je nach Anwendung eine oder mehrere Faserlagen umfassen, wobei sich unterschiedliche Faserlagen beispielsweise durch den jeweiligen Faserwinkel unterscheiden. Als Faserwinkel wird hierbei der Winkel zwischen Rotationsachse und der Ausrichtung der gewickelten Faser (Faserrichtung) in der Faserlage bezeichnet, wobei beim Faserwinkel nicht zwischen dem Wickelsinn (vorwärts / rückwärts bzw. rechts / links) unterschieden wird. Somit haben beispielsweise die sich in Helixlagen kreuzenden Fasern den gleichen Faserwinkel (gleicher Betrag des Wertes). Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, PAN- oder Pitch-basierte Kohlenstofffasern, Keramikfasern, Stahlfasern, Naturfasern oder synthetische Fasern verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können die Faserlage(n) im Faserverbundbereich eine einzelne Faser oder mehrere gleiche oder unterschiedliche Fasern umfassen. Der erste Körper und/oder der Rotationskörper können dabei vollständig oder nur in einem Faserverbundbereich in der Nähe der Schneidbereiche aus Faserverbundmaterial hergestellt sein. Das Faserverbundmaterial des ersten Körpers und das zweite Faserverbundmaterial des zweiten Körpers können die gleichen Faser und das gleiche Matrixmaterial umfassen oder sich in der Wahl der jeweiligen Fasern und/oder der jeweiligen Matrixmaterialien unterscheiden. Der Begriff "Faserverbundbereich" bezeichnet einen Bereich oder Volumen des Rotationskörpers beziehungsweise des ersten Körpers, das zumindest im Wesentlichen nur aus Faserverbundmaterialien hergestellt ist. In einer Ausführungsform sind der erste Körper und der Rotationskörper vollständig aus Faserverbundmaterial hergestellt. Ein solcher Rotationskörper weist die höchsten Festigkeiten bei geringem Gewicht auf.

Die Überdeckung der Schneidbereiche des ersten Körpers, die durch Zerschneiden eines Grundkörpers entstanden sind, verhindert, das es an den Schneidflächen an den jeweiligen Faserschichtenden zu Faserausbrüchen der freien Faserenden bei Benutzung des Rotationskörpers als rotierende Komponente in einem Rotor kommen kann. Während der Rotation treten Schubspannungen an den freien Enden der Fasern auf, die zu diesen Faserausbrüchen führen. Auch können die Ausbrüche durch Materialschädigungen beim Zerschneiden verursacht werden. Aufgrund der Fliehkräfte käme es bei fehlender Überdeckung zu Faserabwürfen. Bei einer welligen Faserlage kann der Schneidprozess zur Herstellung des ersten Körpers auch dazu führen, dass wellige Fasern beidseitig abgetrennt werden und somit einen noch wesentlich geringeren Verbund mit dem restlichen ersten Faserverbundmaterial besitzen. Insbesondere diese beidseitig abgetrennten Fasern würden während der Rotation aufgrund der Fliehkräfte vom restlichen Faserverbundmaterial gelöst werden. Die vollständige Überdeckung verhindert gerade dieses Ablösen auf der gesamten Schneidfläche. Eine Abdeckung der Innerseite des ersten Körpers bzw. des Rotationskörpers (Seite hingewandt zur Rotationsachse) ist nicht notwendig, da die Fasern dort aufgrund der Fliehkräfte bei der Rotation in das Faserverbundmaterial hineingedrückt werden. Durch das Überwickeln wird die Belastung der freien Faserenden vermindert. Die Überdeckung hat dafür im Bereich der Schneidflächen gerade keine freien Faserenden, sondern durchgehende Fasern als Umfangslage gewickelt. Die Überdeckung kann hierbei am äußeren durch einen Schneidprozess hergestellten Ende des ersten Körpers so enden, dass die Überdeckung die Schneidfläche(n) in Richtung senkrecht zur Rotationsachse gesehen überdeckt, aber sich in Richtung parallel zur Rotationsachse nicht über das Ende des ersten Körpers hinaus erstreckt, oder sie kann in anderen Ausführungsformen sogar über das äußere Ende des ersten Körpers parallel zur Rotationsachse hinausgehen. Falls die Überwicklung über den ersten Körper hinausgeht, so ist das aber auf wenige Millimeter beschränkt, sonst wird die hinausragende Umfangslage zu instabil gegen Abscheren. Die Dicke der Überdeckung kann je nach Ausführungsform geeignet gewählt werden. Gegebenenfalls kann die Überdeckung auch dünn ausgeführt sein.

Der Begriff "Umfangslage" bezeichnet ein Schichtpaket aus Fasern, die mit einer Faserrichtung entlang eines Faserwinkels mit mehr als 80 Grad zur vorgesehenen Rotationsachse gewickelt wurden und nach Aushärten in eben dieser Ausrichtung verbleiben. In Umfangslagen sind die Fasern somit im Wesentlichen in tangentialer Richtung (senkrecht zur Rotationsachse umlaufend um den Wickeldorn) gewickelt, wodurch der entsprechende Körper gegen in tangentialer Richtung wirkende Kräfte gestärkt wird. Im Gegensatz dazu bezeichnen beispielsweise Helixlagen Schichtpakete aus Faserschichten, die mit einer Faserrichtung gewickelt wurden, die deutlich von der Faserrichtung in einer Umfangslage zu kleineren Faserwinkeln abweicht, beispielsweise haben Faser in solchen Helixlagen einen Faserwinkel weniger als 60 Grad zur vorgesehenen Rotationsachse. Als Faserwinkel wird der Winkel zwischen Rotationsachse und Faserausrichtung bezeichnet, wobei hier nicht zwischen den beiden möglichen Wickelrichtungen unterschieden wird, sodass der Faserwinkel immer den Betrag des Winkels unabhängig vom Wickelsinn darstellt.

Der erfindungsgemäße Rotationskörper stellt somit ein Bauteil bereit, das weiterhin mittels Abschneiden bearbeitet werden kann und bei dem das Risiko einer Beschädigung des Bauteils oder der umgebenden Komponenten durch im rotierenden Betrieb abgelöste Faserverbundmaterialien deutlich verringert wird. In einer Ausführungsform umfasst der erste Körper zumindest eine Helixlage aus Fasern mit einer Faserrichtung entlang eines Faserwinkels kleiner 50 Grad zur Rotationsachse. In einer bevorzugten Ausführungsform ist der Faserwinkel in der Helixlage zwischen 13 Grad und 40 Grad. Die Faserrichtung in Helixlagen dient dazu, die Biegesteifigkeit des ersten Körpers und damit des Rotationskörpers zu erhöhen. Für Helixlagen werden zudem meist hochsteife Fasern, beispielsweise sogenannte Pechfasern, verwendet. Dadurch kann die Dicke des Schichtpaketes aus übereinander gewickelten Faserschichten in der Helixlage gering gehalten werden.

In einer weiteren Ausführungsform umfasst der erste Körper des Weiteren ein oder mehrere Umfangslagen aus Fasern mit einer Faserrichtung entlang eines Faserwinkels größer 80 Grad zur Rotationsachse. Diese Umfangslage verstärkt den Rotationskörper in tangentialer Richtung und zusätzlich führt die Überwicklung der Helixlage mit einer Umfangslage dazu, dass aus den Bereichen in der Helixlage zwischen sich kreuzenden Faser überschüssiges Harz und eventuell vorhandene Luftblasen herausgepresst werden, was den Materialverbund im Faserverbundmaterial weiter deutlich verbessert. In einer weiteren Ausführungsform wird die Außenseite des ersten Körpers außerhalb des Schneidbereichs durch eine der Umfangslagen gebildet.

In einer Ausführungsform verläuft die Verjüngung des ersten Körpers von der Außenseite zur Innenseite konisch, konvex oder konkav mit einem Schneidwinkel. Der Schneidwinkel bezeichnet dabei bei einer konischen Verjüngung den Winkel zwischen Schneidfläche und Innenseite des ersten Körpers. Bei einer konkaven oder konvexen Verjüngung bezeichnet der Schneidwinkel den Winkel zwischen der Innenseite des ersten Körpers und der Schneidfläche am jeweiligen ersten oder zweiten Ende. Ein Schnitt zur Einkürzung des ersten Körpers, der senkrecht zur Rotationsachse ausgeführt ist, verhindert eine gute Verbindung des zweiten Faserverbundmaterials mit dem Faserverbundmaterial des ersten Körpers. Insofern bietet ein konischer, konkaver oder konvexer Verlauf eine große Schnittfläche, über die eine gute Verbindung der Fasermaterialien der ersten und zweiten Körper ermöglicht wird. In einer bevorzugten Ausführungsform liegt dafür der Schneidwinkel zwischen 10 Grad und 30 Grad.

In einer weiteren Ausführungsform besitzt der Rotationskörper eine Gesamtdicke senkrecht zur vorgesehenen Rotationsachse des Rotationskörpers, wobei die Dicke des ersten Körper außerhalb der Schneidbereiche nicht größer als 50% der Gesamtdicke, vorzugsweise nicht größer als 35% der Gesamtdicke, ist. Dadurch wird eine zuverlässige Abdeckung der Schneidflächen gewährleistet

Die Gesamtdicke des Rotationskörpers kann je nach Ausführungsform für verschiedene Positionen entlang der Rotationsachse schwanken. Beispielsweise könnte der Rotationskörper nach außen hin auch eine lokale Aufdickung, eine ballige Form oder eine Form entlang der Rotationsachse einen mit einem konvexen oder konkaven Verlauf besitzen. In einer Ausführungsform besitzt der Rotationskörper eine Gesamtdicke senkrecht zur vorgesehenen Rotationsachse des Rotationskörpers, die über den gesamten Rotationskörper entlang der vorgesehenen Rotationsachse konstant ist.

Die Erfindung bezieht sich des Weiteren auf einen Rotor mit einem erfindungsgemäßen Rotationskörper und einer oder mehreren Kraftübertragungskomponenten, die mit dem Rotationskörper zur Variation der Rotationsenergie des Rotationskörpers geeignet verbunden sind, wobei die Kraftübertragungskomponenten jeweils über eine Welle oder Zapfen geeignet gelagert sind und zumindest eine der Wellen oder Zapfen über einen Motor geeignet angetrieben werden kann. Die voranstehend beschriebenen Vorteile treffen gleichermaßen auch auf den entsprechend gestalteten Rotor zu. In einer Ausführungsform wird der Rotor als Welle oder Felge zum Betreiben von Maschinen oder Komponenten, vorzugsweise als Schiffswelle, Motorwelle, Getriebewelle, Welle in einer Druckmaschine oder als Rotor zum Speichern von Energie in einem Schwungradenergiespeicher, verwendet. Die voranstehend beschriebenen drehenden Rotationskörper sind universell zu Zwecken aller Art einsetzbar. Der Fachmann kann den erfindungsgemäßen Rotor im Rahmen der vorliegenden Erfindung auch in anderen Anwendungen einsetzen.

Die Erfindung betrifft des Weiteren einen Schwungradenergiespeicher mit ein oder mehreren jeweils von einem Maschinengehäuse umschlossenen erfindungsgemäßen Rotoren, wobei der Rotor über eine Motor-Generator-Einheit zum Speichern von elektrischer Energie beschleunigt und zur Abgabe von elektrischer Energie abgebremst werden kann.

Die Erfindung betrifft des Weiteren ein Verfahren zur Herstellung eines erfindungsgemäßen Rotationskörpers umfassend die Schritte:
(a) Herstellen eines hohlförmigen Grundkörpers zumindest teilweise aus Faserverbundmaterial ohne Schneidbereich mit einer zur vorgesehenen Rotationsachse hin gerichteten Innenseite und einer entgegengesetzten Außenseite auf einem ersten Wickelkörper mittels eines geeigneten Wickelverfahrens;
(b) Verfestigung des Faserverbundmaterials des Grundkörpers und Entfernen des ersten Wickelkörpers vom Grundkörper;
(c) Zerschneiden des Grundkörpers an den gewünschten ersten und/oder zweiten Enden des ersten Körpers zur Herstellung des ersten Körpers mit einer gewünschten Länge, wodurch am ersten Körper Schneidflächen in den jeweils an die ersten und/oder zweiten Enden abgrenzenden Schneidbereichen, die sich von der Außenseite zur Innenseite zum jeweiligen Ende hin verjüngen, erzeugt werden;
(d) Einspannen des ersten Körpers in einen als Kavität ausgestalteten zweiten Wickelkörper;
(e) Herstellen des Rotationskörpers mittels Überwickeln des ersten Körpers mit einer Umfangslage aus einem zweiten Faserverbundmaterial aus Fasern mit einer Faserrichtung entlang eines Faserwinkels mit mehr als 80 Grad zur vorgesehenen Rotationsachse des Rotationskörpers zur Bildung eines zweiten Körpers, sodass der zweite Körper zumindest alle Schneidbereiche der Außenseite des ersten Körper zumindest senkrecht zur Rotationsachse gesehen überdeckt; und
(f) Verfestigen des zweiten Faserverbundmaterials und Entfernen des zweiten Wickelkörpers.

Der erste Wickelkörper bezeichnet hierbei die formvorgebende Unterlage für den darauf gewickelten Körper (hier erster und zweiter Körper). Die Form des Wickelkörpers bestimmt damit die spätere Form der Innenseite des darauf gewickelten Körpers. Die Verfestigung der Fasern und Faserlagen erfolgt beispielsweise bei reaktiven Systemen wie Duomeren durch Aushärtung und bei anderen Systemen beispielweise auch durch Abkühlung. Der Begriff Verfestigung kann beispielsweise ein Vernetzen oder Teilvernetzen der Fasern oder Faserlagen bezeichnen. Bei den Schritten (a) und/oder (e) kann in einer Ausführungsform zusätzlich ein Zwischenhärtungsschritt für die bereits gewickelten Faserlagen durchgeführt werden. Das Verfestigen des zweiten Faserverbundmaterials bezeichnet einerseits ein Verfestigen innerhalb des zweiten Faserverbundmaterials als auch ein Verfestigen mit den obersten Lagen des Faserverbundmaterials des ersten Körpers.

In einer weiteren Ausführungsform wird zwischen den Schritten (b) und (c) ein zusätzlicher Schritt des Vorbereitens der Außenseite des ersten Körpers für die nachfolgenden Verfahrensschritte erfolgen, beispielsweise mittels Aufrauen oder anderer Techniken wie beispielsweise das Entfernen eines Abreißgewebes (Peel Ply). Dieser Schritt dient der verbesserten Verbindung (beispielsweise Vernetzung) des zweiten Körpers mit dem ersten Körper.

Der zweite Wickelkörper besitzt zu den bereits voranstehend für den ersten Wickelkörper beschriebenen Eigenschaften an den jeweils vorgesehenen Wickelenden Anschläge, die zueinander meist parallel ausgerichtet sind, sodass der zweite Wickelkörper durch diese Anschläge den umwickelbaren Raum entlang der Rotationsachse limitiert. Der Radius der Anschläge definiert zusätzlich die maximale Dicke des mit dem zweiten Wickelkörpers herstellbaren Rotationskörpers in diesem Bereich. Der Abstand der Anschläge ist dabei so gestaltet, dass der erste Körper zumindest zwischen diesen Anschlägen angeordnet werden kann. In einer Ausführungsform entspricht der Abstand zwischen den Anschlägen genau der Gesamtlänge des geschnittenen ersten Körpers parallel zur Rotationsachse. Ein Wickelkörper mit Anschlägen wird auch als Kavität bezeichnet.

In einer Ausführungsform des Verfahrens umfasst der Schritt des Herstellens des Grundkörpers die Schritte eines Wickelns zumindest einer Helixlage aus Fasern mit einer Faserrichtung entlang eines Faserwinkels kleiner 50 Grad zur Rotationsachse und ein zusätzliches Wickeln ein oder mehrerer Umfangslagen aus Fasern mit einer Faserrichtung entlang eines Faserwinkels größer 80 Grad zur Rotationsachse auf die Helixlage. In einer Ausführungsform kann das Wickeln so durchgeführt werden, dass sowohl an der Innenseite als auch an der Außenseite des Grundkörpers jeweils eine Helixlage angeordnet ist. In einer bevorzugten Ausführungsform wird das Wickeln so durchgeführt, dass an der Außenseite des Grundkörpers eine der Umfangslagen angeordnet ist.

In einer Ausführungsform des Verfahrens wird der Schritt des Herstellens des Rotationskörpers mittels Überwickeln des ersten Körpers so durchgeführt, dass der so hergestellte Rotationskörper eine Gesamtdicke senkrecht zur vorgesehenen Rotationsachse des Rotationskörpers besitzt, wobei die Dicke des ersten Körpers nicht größer als 50% der Gesamtdicke, vorzugsweise nicht größer als 35% der Gesamtdicke, ist. In einer bevorzugten Ausführungsform wird das Überwickeln dabei so durchgeführt, dass die Gesamtdicke über den gesamten Rotationskörper entlang der vorgesehenen Rotationsachse konstant ist. Die Gesamtdicke des Rotationskörpers kann in anderen Ausführungsformen für verschiedene Positionen entlang der Rotationsachse auch schwanken. Beispielsweise könnte der Rotationskörper nach außen hin auch eine lokale Aufdickung, eine ballige Form oder eine Form entlang der Rotationsachse einen mit einem konvexen oder konkaven Verlauf besitzen.

In einer weiteren Ausführungsform des Verfahren besitzt der zweite Wickelkörper eine Länge, die über die ersten und/oder zweiten Enden des ersten Körpers nicht mehr als wenige Millimeter (weniger als 1 cm) hinausragt, so dass das Überwickeln des ersten Körpers so durchgeführt wird, dass der erste Körper über seine ersten und/oder zweiten Enden parallel zur vorgesehenen Rotationsachse hinaus überwickelt wird. Der Begriff "wenige Millimeter" beschränkt den entsprechenden Bereich auf unter 1 cm.

### Kurze Beschreibung der Abbildungen

Diese und andere Aspekte der Erfindung werden im Detail in den Abbildungen wie folgt gezeigt.
- Fig.1:: eine nicht erfindungsgemäß Bauform des ersten Körpers (a) in Draufsicht auf das erste Ende und (b) im seitlichen Schnitt;
- Fig.2:: eine nicht erfindungsgemäß Bauform eines Rotationskörpers (a) in Draufsicht auf das erste Ende und (b) im seitlichen Schnitt;
- Fig.3:: eine nicht erfindungsgemäß Bauform eines Rotationskörpers im seitlichen Schnitt mit Faserlagen im ersten und zweiten Körper;
- Fig.4:: eine Ausführungsform des erfindungsgemäßen Rotationskörpers in Draufsicht mit schematisch dargestellten Faserverläufen (Faser, Faserrichtung, Faserwinkel) in den ersten und zweiten Körpern;
- Fig.5:: eine Ausführungsform des erfindungsgemäßen Rotationskörpers (a) in Draufsicht auf das erste Ende und (b) im seitlichen Schnitt (Ausschnitt);
- Fig.6:: eine Ausführungsform des erfindungsgemäßen Rotors im seitlichen Schnitt;
- Fig.7:: eine schematische Darstellung einer Ausführungsform des erfindungsgemäßen Schwungradenergiespeichers;
- Fig.8:: eine Ausführungsform des erfindungsgemäßen Verfahrens zur Herstellung des erfindungsgemäßen Rotationskörpers;

### Detaillierte Beschreibung der Ausführungsbeispiele

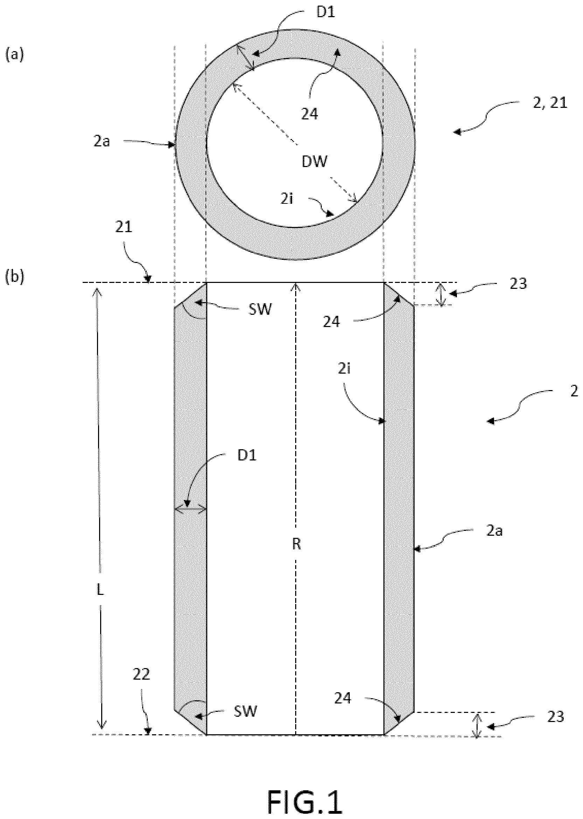

Fig.1 zeigt eine nicht erfindungsgemäß Bauform des ersten Körpers 2 (a) in Draufsicht auf das erste Ende 21 und (b) im seitlichen Schnitt. Der erste Körper 2 ist ein solider Körper mit einem ersten und einem zweiten Ende 21, 22 mit einer zur vorgesehenen Rotationsachse R hin gerichteten Innenseite 2i und einer entgegengesetzten Außenseite 2a. Hierbei verjüngt sich der erste Körper 2 in einem Schneidbereich 23, der jeweils an das erste und zweite Ende 21, 22 angrenzt entlang einer Schneidfläche 24 von der Außenseite 2a zur Innenseite 2i zum jeweiligen Ende 21, 22 hin. Die hier gezeigte Verjüngung des ersten Körpers 2 von der Außenseite 2a zur Innenseite 2i ist konisch ausgestaltet. In anderen Bauformen könnte sie aber auch konkav oder konvex mit einem Schneidwinkel SW an den jeweiligen ersten und/oder zweiten Enden verlaufen. Der Schneidwinkel SW zwischen Schneidfläche 24 und Innenfläche 2i an jeweiligen ersten und zweiten Ende kann dabei unabhängig von der weiteren Formverlauf der Schneidfläche 24 zwischen 10 Grad und 30 Grad betragen. Der Rotationskörper 1 ist dabei zur Rotation um eine Rotationsachse R vorgesehen und bildet einen Teil der Mantelfläche des späteren Rotors 10. Der erste Körper 2 besteht aus Faserverbundmaterial und wird mit einem Wickelverfahren hergestellt. Dabei entsteht der erste Körper 2 aus dem gewickelten Fasermaterial um einen Wickelkörper herum, wobei der Wickelkörper einen äußeren Durchmesser DW hat. Der Wickelkörper wird nach Fertigstellung des ersten Körpers 2 entfernt und ist somit hier nicht gezeigt. Die innere Form des ersten Körpers 2 wird durch den Wickelkörper bestimmt und ist hier ein Hohlzylinder mit einer Zylinderinnenseite als die Innenseite 2i und einer Zylinderaußenseite als die Außenseite 2a, der einen Durchmesser gleich dem Durchmesser DW des ersten Wickelkörpers besitzt. Die Zylinderachse entspricht der vorgesehenen Rotationsachse R. Die Dicke D1 des ersten Körpers 2 ist die Dicke außerhalb der Schneidbereiche 23. In Fig.1(a) ist die Draufsicht auf das erste Ende 21 gezeigt, sodass von ersten Körper 2 in dieser Draufsicht nur die konisch zulaufende Schneidfläche 24 sichtbar ist. Die Länge L des ersten Körpers bildet in den Bauformen, wo die ersten und/oder zweiten Enden zur Bildung des zweiten Körpers nicht überwickelt sind, die Gesamtlänge des Rotationskörpers 1.

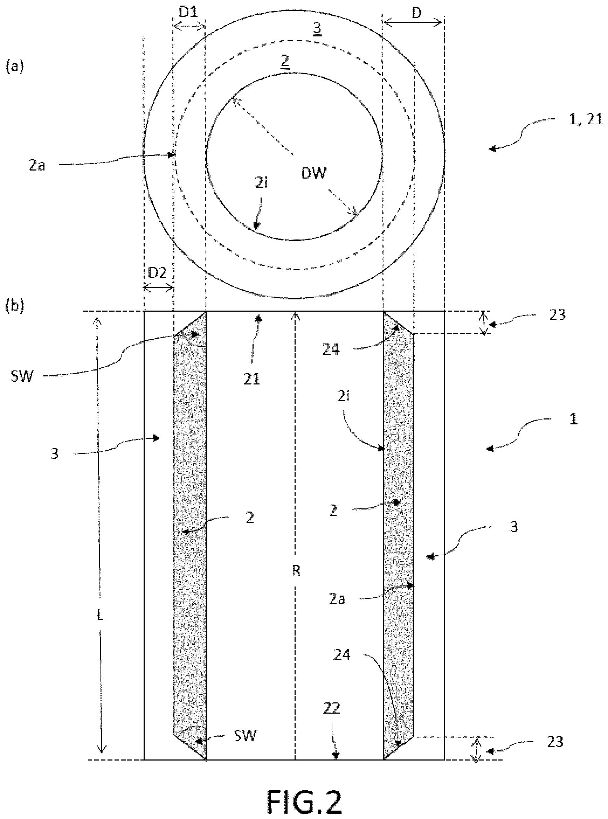

Fig.2 zeigt eine nicht erfindungsgemäß Bauform des Rotationskörpers 1 (a) in Draufsicht auf das erste Ende 21 und (b) im seitlichen Schnitt. Bezüglich des grau unterlegten ersten Körpers 2 wird auf Fig.1 verwiesen. Der gegenüber Fig.1 zusätzliche zweite Körper 3 ist ein ebenfalls aus einem zweiten Faserverbundmaterial gewickelter Körper 3, der so auf den ersten Körper 2 gewickelt ist, dass der zweite Körper 3 zumindest den Schneidbereich 23 und die Außenseite 2a des ersten Körper 2 zumindest senkrecht zur Rotationsachse R gesehen überdeckt. Die Dicke D2 des zweiten Körpers 3 ist die Dicke außerhalb der Schneidbereiche 23. In Fig.2(a) ist die Draufsicht auf das erste Ende 21 gezeigt, wobei durch die Überwicklung der Schneidflächen 24 durch das Faserverbundmaterial des zweiten Körpers 3 im Gegensatz zu Fig.1 nun nicht mehr der erste Körper 2 sichtbar ist, sondern nur der über die Schneidflächen 24 gewickelte zweite Körper 3. Die Länge L des zweiten Körpers 3 bildet die Länge des Rotationskörpers 1, die hier gleich der Länge L des ersten Körpers 2 ist.

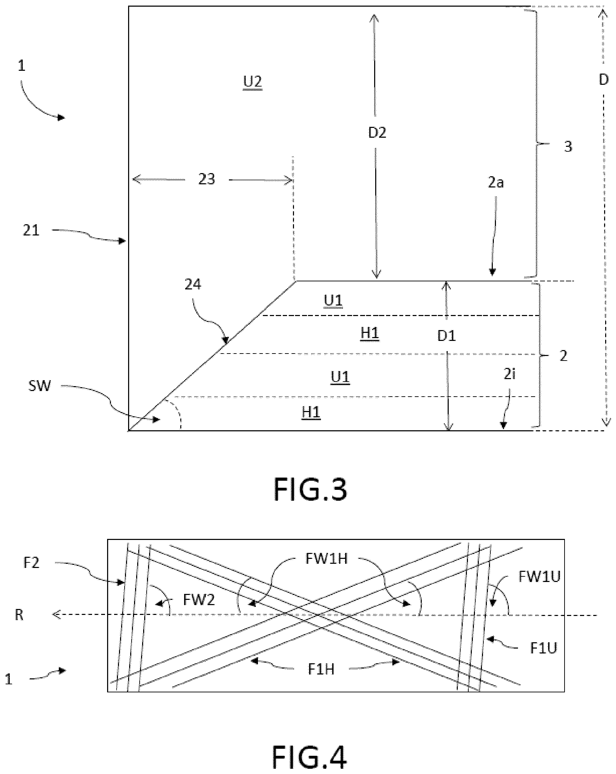

Fig.3 zeigt eine nicht erfindungsgemäß Bauform des Rotationskörpers 1 im seitlichen Schnitt mit Faserlagen im ersten und zweiten Körper 2,3 als Beispiel im Bereich des ersten Endes 21. Der erste Körper 2 umfasst grundsätzlich mindestens eine Helixage H1, in dieser Ausführungsform zwei Helixlagen H1, die zumindest außerhalb des Schneidbereichs 23 jeweils von einer Umfangslage U1 überwickelt sind. Der zweite Körper 3 ist hier vollständig aus Umfangslagen gebildet. Der Rotationskörper 1 besitzt dabei eine Gesamtdicke D senkrecht zur vorgesehenen Rotationsachse R des Rotationskörpers 1, wobei die Dicke D1 des ersten Körper 2 außerhalb der Schneidbereiche 23 bis zu 95% der Gesamtdicke betragen kann. IN anderen Ausführungsformen ist die Dicke D1 beispielsweise nicht größer als 50% der Gesamtdicke D, vorzugsweise nicht größer als 35% der Gesamtdicke D, ist. In den in den Figuren 1 - 3 gezeigten Ausführungsformen besitzt der Rotationskörper 1 eine Gesamtdicke D senkrecht zur vorgesehenen Rotationsachse R des Rotationskörpers, die über den gesamten Rotationskörper 1 entlang der vorgesehenen Rotationsachse R konstant ist. Entsprechend steigt die Dicke D2 des zweiten Körpers 3 über dem Schneidbereich 23 entsprechend zur Abnahme der Dicke D1 des ersten Körpers im Schneidbereich 23. Die Gesamtdicke des Rotationskörpers kann in anderen Ausführungsformen für verschiedene Positionen entlang der Rotationsachse auch schwanken. Beispielsweise könnte der Rotationskörper nach außen hin auch eine lokale Aufdickung, eine ballige Form oder eine Form entlang der Rotationsachse einen mit einem konvexen oder konkaven Verlauf besitzen.

Fig.4 zeigt eine Ausführungsform des erfindungsgemäßen Rotationskörpers 1 in Draufsicht mit schematisch dargestellten Faserverläufen (Faser, Faserrichtung, Faserwinkel) in den ersten und zweiten Körpern 2, 3. Hier sind aus Übersichtsgründen lediglich einzelne wenige Fasern exemplarisch für die Fasern in den jeweiligen Faserlagen gezeigt. Die Helixlage(n) H1 im ersten Körper 2 wird (werden) aus Fasern F1H mit einer Faserrichtung entlang eines Faserwinkels FW1H kleiner 50 Grad zur Rotationsachse R gebildet. Vorzugsweise liegt der Faserwinkel FW1H der Helixlagen H1 zwischen 13 Grad und 40 Grad. Die Umfangslagen U1 und U2 werden aus Fasern F1U und F2 mit einer Faserrichtung entlang eines Faserwinkels FW1U und FW2 mit mehr als 80 Grad zur vorgesehenen Rotationsachse R gebildet.

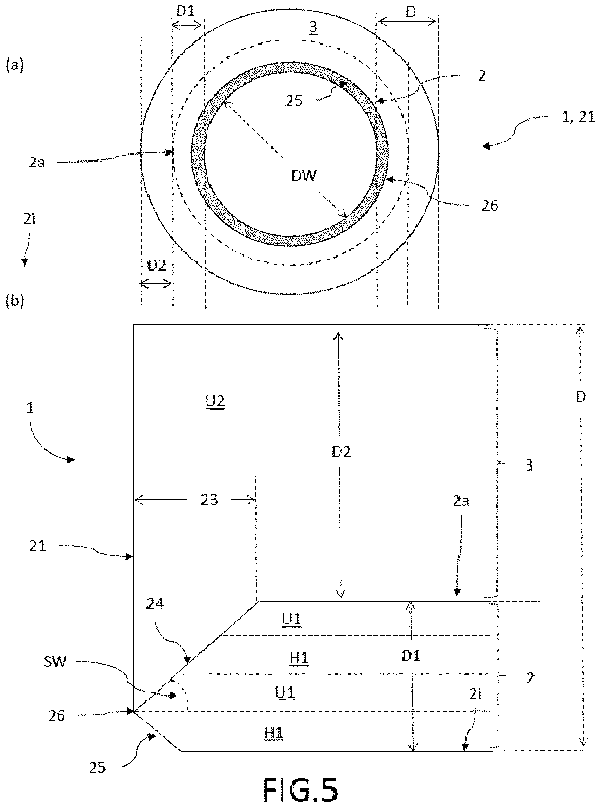

Fig.5 zeigt eine Ausführungsform des erfindungsgemäßen Rotationskörpers 1 (a) in Draufsicht auf das erste Ende 21 und (b) im seitlichen Schnitt (Ausschnitt) im Bereich des ersten Endes 21. In dieser Ausführungsform besitzt der erste Körper 2 zwei unterschiedliche Schneidflächen, die in den Figuren 1 - 3 gezeigte Schneidfläche 24 und zusätzlich eine innere Schneidfläche 25, die in Richtung der Schneidfläche 24 verläuft und mit ihr an einer Berührungskante 26 zusammenstößt. Die innere Schneidfläche 25 weitet dabei die Innenseite 2i auf. Der zweite Körper überwickelt hier, wie auch in den Figuren 2 und 3 gezeigt die Schneidfläche 14, nicht aber die innere Schneidfläche 25. Auf eine Überwicklung der inneren Schneidfläche 25 kann verzichtet werden. Zwar können an der inneren Schneidfläche 25 ebenso wie bei der Schneidfläche 24 frei Faserenden in den Schneidflächen vorliegen. Im Gegensatz zur der nach außen gerichteten Schneidfläche 24 führen die Fliehkräfte aufgrund der Rotation bei der inneren Schneidfläche 25 dazu, dass die freien Faserenden in die innere Schneidfläche 25 hineingedrückt werden und es so eben nicht zu Faserausbrüchen der freien Faserenden bei Benutzung des Rotationskörpers als rotierende Komponente kommen kann. Somit kann eine innere Schneidkante wie in Fig.5 gezeigt ohne Überwicklung im erfindungsgemäßen Rotationskörpers 1 toleriert werden. In der Draufsicht in Fig.5(a) ist daher weiterhin die Schneidfläche 24 analog zu der Fig.2 nicht sichtbar, dagegen ist die innere Schneidfläche (hier grau dargestellt) sichtbar.

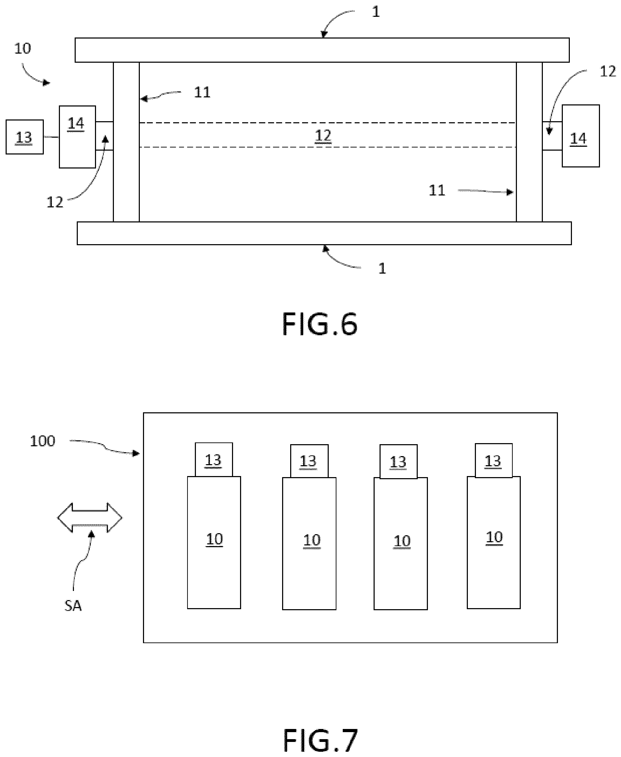

Fig.6 zeigt eine Ausführungsform des erfindungsgemäßen Rotors 10 im seitlichen Schnitt. Der Rotor 10 umfasst einen erfindungsgemäßen Rotationskörper 1 (Details siehe die vorangegangenen Figuren) und eine oder mehrere Kraftübertragungskomponenten 11 (hier zwei Kraftübertragungskomponenten 11), die mit dem Rotationskörper 1 zur Variation der Rotationsenergie des Rotationskörpers 1 geeignet verbunden sind, beispielsweise mittels Kleben, Verpressen oder Verschrauben. Die beiden Kraftübertragungskomponenten 11 sind über eine Welle 12 (gestrichelt dargestellt) oder jeweilige separate Zapfen 12 geeignet in jeweiligen Lagern 14 gelagert. Die Welle 12 oder zumindest einer der Zapfen 12 werden über einen Motor 13 zumindest geeignet angetrieben.

Fig.7 zeigt eine schematische Darstellung einer Ausführungsform des erfindungsgemäßen Schwungradenergiespeichers 100. Der Schwungradenergiespeicher 100 umfasst ein oder mehrere jeweils von einem Maschinengehäuse (hier nicht explizit gezeigt) umschlossenen Rotoren 10, wobei der Rotor 10 beziehungsweise der Rotationskörper 1 über eine Motor-Generator-Einheit 13 des Schwungradenergiespeichers 100 zum Speichern von elektrischer Energie beschleunigt und zur Abgabe von elektrischer Energie abgebremst werden kann.

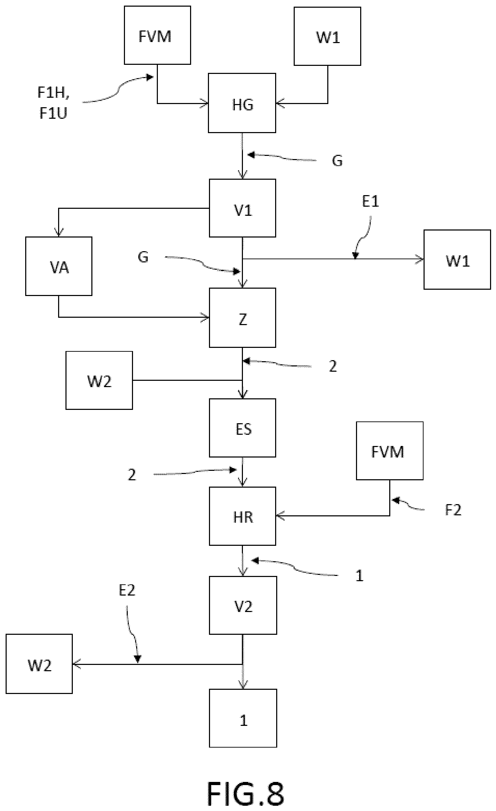

Fig.8 zeigt eine Ausführungsform des erfindungsgemäßen Verfahrens zur Herstellung des erfindungsgemäßen Rotationskörpers 1. Das Verfahren umfasst die Schritte (a) des Herstellens HG eines hohlförmigen Grundkörpers G zumindest teilweise aus Faserverbundmaterial FVM ohne Schneidbereich mit einer zur vorgesehenen Rotationsachse R hin gerichteten Innenseite 2i und einer entgegengesetzten Außenseite 2a auf einem ersten Wickelkörper W1 mittels eines geeigneten Wickelverfahrens; (b) des Verfestigens V1 des Faserverbundmaterials des Grundkörpers und des Entfernens E1 des ersten Wickelkörpers W1 vom Grundkörper; (c) des Zerschneidens Z des Grundkörpers G an den gewünschten ersten und/oder zweiten Enden 21, 22 des ersten Körpers 1 zur Herstellung des ersten Körpers 2 mit einer gewünschten Länge L, wodurch am ersten Körper 1 Schneidflächen 24 in den jeweils an die ersten und/oder zweiten Enden 21, 22 abgrenzenden Schneidbereichen 23 erzeugt werden und (d) des Einspannens ES des ersten Körpers in einen als Kavität ausgestalteten zweiten Wickelkörper W2. In einer Ausführungsform kann dabei zwischen den Schritten (b) und (d) ein zusätzlicher Schritt des Vorbereitens VA der Außenseite des ersten Körpers 2 für die nachfolgenden Verfahrensschritte erfolgen, beispielsweise mittels Aufrauen oder anderer Techniken wie beispielsweise das Entfernen eines Abreißgewebes (Peel Ply). Das erfindungsgemäße Verfahren umfasst des Weiteren die Schritte (e) des Herstellens HR des Rotationskörpers 1 mittels Überwickeln des ersten Körpers 2 mit einer Umfangslage U2 aus einem zweiten Faserverbundmaterial aus Fasern F2 mit einer Faserrichtung entlang eines Faserwinkels FW2 mit mehr als 80 Grad zur vorgesehenen Rotationsachse R des Rotationskörpers 1 zur Bildung eines zweiten Körpers 2 so, dass der zweite Körper 3 zumindest alle Schneidbereiche 23 der Außenseite 2a des ersten Körper 2 zumindest senkrecht zur Rotationsachse R gesehen überdeckt; und (f) des Verfestigens V2 des zweiten Faserverbundmaterials und des Entfernens E2 des zweiten Wickelkörpers W2.

In einer Ausführungsform kann dabei der Schritt des Herstellens HG des Grundkörpers die Schritte eines Wickelns zumindest einer Helixlage H1 aus Fasern F1H mit einer Faserrichtung entlang eines Faserwinkels FW1H kleiner 50 Grad zur Rotationsachse R und ein zusätzliches Wickeln ein oder mehrerer Umfangslagen U1 aus Fasern F1U mit einer Faserrichtung entlang eines Faserwinkels FW1U größer 80 Grad zur Rotationsachse R auf die Helixlage H1 umfassen. Vorzugsweise wird das Wickeln so durchgeführt, dass an der Außenseite 2a des Grundkörpers G eine der Umfangslagen U1 angeordnet ist. In einer weiteren Ausführungsform kann der Schritt des Herstellens HR des Rotationskörpers 1 mittels Überwickeln des ersten Körpers 2 so durchgeführt werden, dass der so hergestellte Rotationskörper 1 eine Gesamtdicke D senkrecht zur vorgesehenen Rotationsachse R des Rotationskörpers 1 besitzt, wobei die Dicke D1 des ersten Körpers 2 nicht größer als 50% der Gesamtdicke D, vorzugsweise nicht größer als 35% der Gesamtdicke D ist. Vorzugsweise wird das Überwickeln dabei so durchgeführt, dass die Gesamtdicke D über den gesamten Rotationskörper 1 entlang der vorgesehenen Rotationsachse R konstant ist. Die Gesamtdicke des Rotationskörpers kann in anderen Ausführungsformen für verschiedene Positionen entlang der Rotationsachse auch schwanken. Beispielsweise könnte der Rotationskörper nach außen hin auch eine lokale Aufdickung, eine ballige Form oder eine Form entlang der Rotationsachse einen mit einem konvexen oder konkaven Verlauf besitzen. In einer weiteren Ausführungsform besitzt der zweite Wickelkörper W2 eine Länge LW2, die über die ersten und/oder zweiten Enden 21, 22 des ersten Körpers 2 nicht mehr als wenige Millimeter hinausragt, so dass das Überwickeln des ersten Körpers 2 so durchgeführt wird, dass der erste Körper 2 über seine ersten und/oder zweiten Enden 21, 22 parallel zur vorgesehenen Rotationsachse R hinaus überwickelt wird.

Die hier gezeigten Ausführungsformen stellen nur Beispiele für die vorliegende Erfindung dar und dürfen daher nicht einschränkend verstanden werden. Alternative, durch den Fachmann in Erwägung gezogene Ausführungsformen sind gleichermaßen vom Schutzbereich der vorliegenden Erfindung umfasst.

### LISTE DER BEZUGSZEICHEN

- 1: Rotationskörper
- 2: erster Körper
- 2a: Außenseiten des ersten Körpers
- 2i: Innenseite des ersten Körpers
- 21: erstes Ende des ersten Körpers
- 22: zweites Ende des ersten Körpers
- 23: Schneidbereich angrenzend an erste / zweite Enden
- 24: Schneidfläche im Schneidbereich
- 25: innere Schneidfläche
- 26: Berührungskante zwischen innerer Schneidfläche und Schneidfläche 24 (äußere Schneidfläche)
- 3: zweiter Körper
- 10: Rotor
- 11: Kraftübertragungskomponente, Nabe
- 12: Welle oder Zapfen
- 13: Motor zum Antrieb des Rotors, Motor-Generator-Einheit
- 14: Lager
- 100: Schwungradenergiespeicher

- D: Dicke des Rotationskörpers senkrecht zu Rotationsachse
- D1: Dicke des ersten Körpers senkrecht zu Rotationsachse
- D2: Dicke des zweiten Körpers senkrecht zu Rotationsachse
- DW: Durchmesser des ersten Wickelkörpers
- E1: Entfernen des ersten Wickelkörpers
- E2: Entfernen des zweiten Wickelkörpers
- ES: Einspannen des ersten Körpers in den zweiten Wickelkörper
- F1H: Fasern in der Helixlage(n) des ersten Körpers
- F1U: Fasern in der Umfangslage(n) des ersten Körpers
- F2: Faser in den Umfangslagen des zweiten Körpers
- FW1H: Faserwinkel der Fasern F1H
- FW1U: Faserwinkel der Fasern F1U
- FW2: Faserwinkel der Fasern F2
- G: Grundkörper
- H1: Helixlage des ersten Körpers
- HG: Herstellen des Grundkörpers
- HR: Herstellen des Rotationskörpers
- L: Länge des ersten Körpers
- R: (vorgesehene) Rotationsachse
- SA: Speichern oder Abgabe von Energie
- SW: Schneidwinkel
- U1: Umfangslage(n) des ersten Körpers
- U2: Umfangslagen des zweiten Körpers
- V1: Verfestigen des Faserverbundmaterials des Grundkörpers
- V2: Verfestigen des zweiten Faserverbundmaterials
- VA: Vorbereitens der Außenseite des ersten Körpers
- W1: erster Wickelkörper
- W2: zweiter Wickelkörper
- Z: Zerschneiden des Grundkörpers

## Patentansprüche

1. Ein Rotationskörper (1) umfassend einen zumindest teilweise aus Faserverbundmaterial gewickelten hohlförmigen ersten Körper (2) mit einem ersten und zweiten Ende (21, 22) und mit einer zur vorgesehenen Rotationsachse (R) hin gerichteten Innenseite (2i) und einer entgegengesetzten Außenseite (2a), wobei sich der erste Körper (2) zumindest in einem Schneidbereich (23) angrenzend zumindest an einem der ersten oder zweiten Enden (21, 22) entlang einer Schneidfläche (24) von der Außenseite (2a) zur Innenseite (2i) zum jeweiligen Ende (21, 22) hin verjüngt, und einen aus einem zweiten Faserverbundmaterial gewickelten zweiten Körper (3) aus einer Umfangslage (U2) aus Fasern (F2) mit einer Faserrichtung entlang eines Faserwinkels (FW2) mit mehr als 80 Grad zur vorgesehenen Rotationsachse (R), die so auf den ersten Körper (2) gewickelt sind, dass der zweite Körper (3) zumindest alle Schneidbereiche (23) der Außenseite (2a) des ersten Körpers (2) zumindest senkrecht zur Rotationsachse (R) gesehen überdeckt, ohne selber durch einen Schneidprozess abgelängt zu werden,
**dadurch gekennzeichnet,**
**dass** der erste Körper (2) eine zusätzliche in Richtung der Schneidfläche (24) verlaufende innere Schneidfläche (25) aufweist, wobei die Schneidflächen (24, 25) an einer Berührungskante (26) zusammenstoßen und wobei die innere Schneidfläche (25) nicht von dem zweiten Körper (3) überwickelt ist.

2. Der Rotationskörper (1) nach Anspruch 1,
**dadurch gekennzeichnet,**
**dass** der erste Körper (2) zumindest eine Helixlage (H1) aus Fasern (F1 H) mit einer Faserrichtung entlang eines Faserwinkels (FW1H) kleiner 50 Grad zur Rotationsachse (R), vorzugsweise ist der Faserwinkel (FW1H) zwischen 13 Grad und 40 Grad, umfasst.

3. Der Rotationskörper (1) nach Anspruch 2,
**dadurch gekennzeichnet,**
**dass** der erste Körper (1) des Weiteren ein oder mehrere Umfangslagen (U1) aus Fasern (F1U) mit einer Faserrichtung entlang eines Faserwinkels (FW1U) größer 80 Grad zur Rotationsachse (R) umfasst.

4. Der Rotationskörper (1) nach Anspruch 3,
**dadurch gekennzeichnet,**
**dass** die Außenseite (2a) des ersten Körpers (2) außerhalb des Schneidbereichs (23) durch eine der Umfangslagen (U1) gebildet wird.

5. Der Rotationskörper (1) nach einem der voranstehenden Ansprüche,
**dadurch gekennzeichnet,**
**dass** die Verjüngung des ersten Körpers (2) von der Außenseite (2a) zur Innenseite (2i) konisch, konkav oder konvex mit einem Schneidwinkel (SW) verläuft.

6. Der Rotationskörper (1) nach Anspruch 5,
**dadurch gekennzeichnet,**
**dass** der Schneidwinkel (SW) zwischen 10 Grad und 30 Grad liegt.

7. Der Rotationskörper (1) nach einem der voranstehenden Ansprüche,
**dadurch gekennzeichnet,**
**dass** der Rotationskörper (1) eine Gesamtdicke (D) senkrecht zur vorgesehenen Rotationsachse (R) des Rotationskörpers (1) besitzt, wobei die Dicke (D1) des ersten Körpers (2) außerhalb der Schneidbereiche (23) nicht größer als 50% der Gesamtdicke (D), vorzugsweise nicht größer als 35% der Gesamtdicke (D), ist.

8. Der Rotationskörper (1) nach einem der voranstehenden Ansprüche,
**dadurch gekennzeichnet,**
**dass** der Rotationskörper (1) eine Gesamtdicke (D) senkrecht zur vorgesehenen Rotationsachse (R) des Rotationskörpers besitzt, die über den gesamten Rotationskörper (1) entlang der vorgesehenen Rotationsachse (R) konstant ist.

9. Ein Rotor (10) mit einem Rotationskörper (1) nach Anspruch 1 und einer oder mehreren Kraftübertragungskomponenten (11), die mit dem Rotationskörper (1) zur Variation der Rotationsenergie des Rotationskörpers (1) geeignet verbunden sind, wobei die Kraftübertragungskomponenten (11) jeweils über eine Welle (12) oder Zapfen (12) geeignet gelagert sind und zumindest eine der Wellen (12) oder Zapfen (12) über einen Motor (13) zumindest geeignet angetrieben werden kann.

10. Ein Schwungradenergiespeicher (100) mit ein oder mehreren jeweils von einem Maschinengehäuse umschlossenen Rotoren (10) nach Anspruch 9, wobei der Rotor (10) über eine Motor-Generator-Einheit (13) zum Speichern von elektrischer Energie beschleunigt und zur Abgabe von elektrischer Energie abgebremst werden kann.

11. Ein Verfahren zur Herstellung eines Rotationskörpers (1) nach Anspruch 1, umfassend die Schritte:
(a) Herstellen (HG) eines hohlförmigen Grundkörpers (G) zumindest teilweise aus Faserverbundmaterial ohne Schneidbereich mit einer zur vorgesehenen Rotationsachse (R) hin gerichteten Innenseite (2i) und einer entgegengesetzten Außenseite (2a) auf einem ersten Wickelkörper (W1) mittels eines geeigneten Wickelverfahrens;
(b) Verfestigen (V1) des Faserverbundmaterials des Grundkörpers und Entfernen (E1) des ersten Wickelkörpers (W1) vom Grundkörper;
(c) Zerschneiden (Z) des Grundkörpers (G) an den gewünschten ersten und/oder zweiten Enden (21, 22) des ersten Körpers (1) zur Herstellung des ersten Körpers (2) mit einer gewünschten Länge (L), wodurch am ersten Körper (1) Schneidflächen (24) in den jeweils an die ersten und/oder zweiten Enden (21, 22) abgrenzenden Schneidbereichen (23), die sich von der Außenseite (2a) zur Innenseite (2i) zum jeweiligen Ende (21, 22) hin verjüngen, erzeugt werden;
(d) Einspannen (ES) des ersten Körpers in einen als Kavität ausgestalteten zweiten Wickelkörper (W2);
(e) Herstellen (HR) des Rotationskörpers (1) mittels Überwickeln des ersten Körpers (2) mit einer Umfangslage (U2) aus einem zweiten Faserverbundmaterial aus Fasern (F2) mit einer Faserrichtung entlang eines Faserwinkels (FW2) mit mehr als 80 Grad zur vorgesehenen Rotationsachse (R) des Rotationskörpers (1) zur Bildung eines zweiten Körpers (3), sodass der zweite Körper (3) zumindest alle Schneidbereiche (23) der Außenseite (2a) des ersten Körper (2) zumindest senkrecht zur Rotationsachse (R) gesehen überdeckt; und
(f) Verfestigen (V2) des zweiten Faserverbundmaterials und Entfernen (E2) des zweiten Wickelkörpers (W2).

12. Das Verfahren nach Anspruch 11, wobei zwischen den Schritten (b) und (d) ein zusätzlicher Schritt des Vorbereitens (VA) der Außenseite des ersten Körpers (2) für die folgenden Verfahrensschritte erfolgt, vorzugsweise mittels Aufrauen der Außenseite oder mittels Entfernen eines Abreißgewebes.

13. Das Verfahren nach Anspruch 11 oder 12, wobei der Schritt des Herstellens (HG) des Grundkörpers die Schritte eines Wickelns zumindest einer Helixlage (H1) aus Fasern (F1 H) mit einer Faserrichtung entlang eines Faserwinkels (FW1H) kleiner 50 Grad zur Rotationsachse (R) und ein zusätzliches Wickeln ein oder mehrerer Umfangslagen (U1) aus Fasern (F1U) mit einer Faserrichtung entlang eines Faserwinkels (FW1U) größer 80 Grad zur Rotationsachse (R) auf die Helixlage (H1) umfasst, vorzugsweise wird das Wickeln so durchgeführt, dass an der Außenseite (2a) des Grundkörpers (G) eine der Umfangslagen (U1) angeordnet ist.

14. Das Verfahren nach einem der Ansprüche 11 bis 13, wobei der Schritt des Herstellens (HR) des Rotationskörpers (1) mittels Überwickeln des ersten Körpers (2) so durchgeführt wird, dass der so hergestellte Rotationskörper (1) eine Gesamtdicke (D) senkrecht zur vorgesehenen Rotationsachse (R) des Rotationskörpers (1) besitzt, wobei die Dicke (D1) des ersten Körpers (2) nicht größer als 50% der Gesamtdicke (D), vorzugsweise nicht größer als 35% der Gesamtdicke (D), ist, vorzugsweise wird das Überwickeln dabei so durchgeführt, dass die Gesamtdicke (D) über den gesamten Rotationskörper (1) entlang der vorgesehenen Rotationsachse (R) konstant ist.

15. Das Verfahren nach einem der Ansprüche 11 bis 14, wobei der zweite Wickelkörper (W2) eine Länge (LW2) besitzt, die über die ersten und/oder zweiten Enden (21, 22) des ersten Körpers (2) nicht mehr als wenige Millimeter hinausragt, so dass das Überwickeln des ersten Körpers (2) so durchgeführt wird, dass der erste Körper (2) über seine ersten und/oder zweiten Enden (21, 22) parallel zur vorgesehenen Rotationsachse (R) hinaus überwickelt wird.

## Claims

1. Body of revolution (1) comprising a hollow first body (2) that is wound, at least in part, from fibre composite material and has a first and second end (21, 22), and has an inner side (2i) facing the devised rotation axis (R) and an opposite outer side (2a), whereby the first body (2) tapers, at least in a cutting area (23) adjacent to at least one of the first or second ends (21, 22) along a cutting surface (24), from the outer side (2a) to the inner side (2i) to the corresponding end (21, 22), and a second body (3) that is wound from a second fibre composite material made of a circumferential layer (U2) made of fibres (F2) with a fibre direction along a fibre angle (FW2) of more than 80 degrees with respect to the devised rotation axis (R), which are wound appropriately onto the first body (2) such that the second body (3) covers at least all cutting areas (23) of the outer side (2a) of the first body (2) at least when seen perpendicular to the rotation axis (R) without itself being cut to length by a cutting process,
**characterised in that**
the first body (2) comprises an additional internal cutting surface (25) that extends in the direction of the cutting surface (24), whereby the cutting surfaces (24, 25) hit each other at a contact edge (26), and whereby the internal cutting surface (25) does not have the second body (3) wound over it.

2. Body of revolution (1) according to claim 1,
**characterised in that**
the first body (2) comprises at least one helix layer (H1) made of fibres (F1H) with a fibre direction along a fibre angle (FW1H) of less than 50° with respect to the rotation axis (R), with the fibre angle (FW1H) preferably being between 13 degrees and 40 degrees.

3. Body of revolution (1) according to claim 2,
**characterised in that**
the first body (1) further comprises one or more circumferential layers (U1) made of fibres (F1 U) with a fibre direction along a fibre angle (FW1 U) of more than 80 degrees with respect to the rotation axis (R)).

4. Body of revolution (1) according to claim 3,
**characterised in that**
the outer side (2a) of the first body (2) outside of the cutting area (23) is formed by one of the circumferential layers (U1).

5. Body of revolution (1) according to any one of the preceding claims,
**characterised in that**
the tapering of the first body (2) from the outer side (2a) to the inner side (2i) is conical, concave or convex in shape with a cutting angle (SW).

6. Body of revolution (1) according to claim 5,
**characterised in that**
the cutting angle (SW) is between 10 degrees and 30 degrees.

7. Body of revolution (1) according to any one of the preceding claims,
**characterised in that**
the body of revolution (1) possesses a total thickness (D) perpendicular to the devised rotation axis (R) of the body of revolution (1), whereby the thickness (D1) of the first body (2) outside of the cutting areas (23) is not larger than 50% of the total thickness (D), preferably is not larger than 35% of the total thickness (D).

8. Body of revolution (1) according to any one of the preceding claims,
**characterised in that**
the body of revolution (1) possesses a total thickness (D) perpendicular to the devised rotation axis (R) of the body of revolution that is constant over the entire body of revolution (1) along the devised rotation axis (R).

9. Rotor (10) with a body of revolution (1) according to claim 1 and one or more force transmission components (11) that are suitably connected to the body of revolution (1) for variation of the rotation energy of the body of revolution (1), whereby the force transmission components (11) each are suitably supported by means of a shaft (12) or pins (12), and at least one of the shafts (12) or pins (12) can be driven at least suitably by means of a motor (13).

10. Flywheel energy storage system (100) with one or more rotors (10) according to claim 9, which each are enclosed by a machine housing, whereby the rotor (10) can be accelerated by means of a motor-generator unit (13) for storing electrical energy and can be decelerated for releasing electrical energy.

11. Method for the production of a body of revolution (1) according to claim 1, comprising the steps of:
(a) producing (HG) a hollow base body (G) at least in part from fibre composite material without cutting area with an inner side (2i) facing the devised rotation axis (R) and an opposite outer side (2a) on a first winding body (W1) by means of a suitable winding method;
(b) solidifying (V1) the fibre composite material of the base body and removing (E1) the first winding body (W1) from the base body;
(c) cutting (Z) the base body (G) at the desired first and/or second ends (21, 22) of the first body (1) to produce the first body (2) with a desired length (L), by means of which are generated on the first body (1) cutting surfaces (24) in the cutting areas (23) that are each adjacent to the first and/or second ends (21, 22) and taper from the outer side (2a) to the inner side (2i) to the corresponding end (21, 22);
(d) clamping (ES) the first body into a second winding body (W2) that is designed in the form of a cavity;
(e) producing (HR) the body of revolution (1) by means of winding over the first body (2) a circumferential layer (U2) made of a second fibre composite material of fibres (F2) with a fibre direction along a fibre angle (FW2) of more than 80 degrees with respect to the devised rotation axis (R) of the body of revolution (1) to form a second body (3) such that the second body (3) covers at least all cutting areas (23) of the outer side (2a) of the first body (2) at least when viewed perpendicular with respect to the rotation axis (R); and
(f) solidifying (V2) the second fibre composite material and removing (E2) the second winding body (W2).

12. Method according to claim 11, whereby, between steps (b) and (d), an additional step of preparing (VA) the outer side of the first body (2) for the subsequent procedural steps takes place, preferably by means of roughening the outer side or by means of removing a peel ply.

13. Method according to claim 11 or 12, whereby the step of producing (HG) the base body comprises the steps of winding at least one helical layer (H1) of fibres (F1H) with a fibre direction along a fibre angle (FW1H) of less than 50 degrees with respect to the rotation axis (R) and an additional winding of one or more circumferential layers (U1) of fibres (F1U) with a fibre direction along a fibre angle (FW1U) of more than 80 degrees with respect to the rotation axis (R) onto the helical layer (H1), with the winding preferably being done appropriately such that one of the circumferential layers (U1) is arranged on the outer side (2a) of the base body (G).

14. Method according to any one of the claims 11 to 13, whereby the step of producing (HR) the body of revolution (1) by means of winding over the first body (2) is done appropriately such that the body of revolution (1) thus produced possesses a total thickness (D) perpendicular to the devised rotation axis (R) of the body of revolution (1), whereby the thickness (D1) of the first body (2) is not larger than 50% of the total thickness (D), preferably is no larger than 35% of the total thickness (D), whereby the winding is preferably done appropriately such that the total thickness (D) is constant over the entire body of revolution (1) along the devised rotation axis (R).

15. Method according to any one of the claims 11 to 14, whereby the second winding body (W2) possesses a length (LW2) that projects beyond the first and/or second ends (21, 22) of the first body (2) by no more than a few millimetres such that the winding over the first body (2) is done appropriately such that the winding over the first body (2) extends beyond its first and/or second ends (21, 22) parallel to the devised rotation axis (R).

## Revendications

1. Corps de rotation (1) comprenant un premier corps (2) de forme creuse, enroulé au moins partiellement en matériau composite fibreux avec une première et une seconde extrémité (21, 22) et avec un côté interne (2i) orienté vers l'axe de rotation prévu (R) et un côté externe opposé (2a), dans lequel le premier corps (2) rétrécit au moins dans une région de coupe (23) de manière adjacente au moins à une des première ou seconde extrémités (21, 22) le long d'une face de coupe (24) du côté externe (2a) au côté interne (2i) vers l'extrémité respective (21, 22), et un second corps (3) enroulé en un second matériau composite fibreux constitué d'une couche périphérique (U2) en fibres (F2) avec un sens de fibres le long d'un angle de fibres (FW2) avec plus de 80 degrés par rapport à l'axe de rotation prévu (R) qui sont enroulées sur le premier corps (2) de sorte que le second corps (3) recouvre au moins toutes les régions de coupe (23) du côté externe (2a) du premier corps (2), vues au moins perpendiculairement à l'axe de rotation (R) sans lui-même être coupé à longueur par un processus de coupe,
**caractérisé en ce**
**que** le premier corps (2) présente une face de coupe interne supplémentaire (25) s'étendant en direction de la face de coupe (24), dans lequel les faces de coupe (24, 25) se touchent au niveau d'une arête de contact (26) et dans lequel la face de coupe interne (25) n'est pas enveloppée par le second corps (3).

2. Corps de rotation (1) selon la revendication 1,
**caractérisé en ce**
**que** le premier corps (2) comprend au moins une couche hélicoïdale (H1) en fibres (F1H) avec un sens de fibres le long d'un angle de fibres (FW1H) inférieur à 50 degrés par rapport à l'axe de rotation (R), l'angle de fibres (FW1H) est de préférence compris entre 13 degrés et 40 degrés.

3. Corps de rotation (1) selon la revendication 2,
**caractérisé en ce**
**que** le premier corps (2) comprend en outre une ou plusieurs couches périphériques (U1) en fibres (F1U) avec un sens de fibres le long d'un angle de fibres (FW1U) supérieur à 80 degrés par rapport à l'axe de rotation (R).

4. Corps de rotation (1) selon la revendication 3,
**caractérisé en ce**
**que** le côté externe (2a) du premier corps (2) est formé en dehors de la région de coupe (23) par une des couches périphériques (U1).

5. Corps de rotation (1) selon une des revendications précédentes,
**caractérisé en ce**
**que** le rétrécissement du premier corps (2) du côté externe (2a) au côté interne (2i) s'étend de manière conique, concave ou convexe avec un angle de coupe (SW).

6. Corps de rotation (1) selon la revendication 5,
**caractérisé en ce**
**que** l'angle de coupe (SW) se situe entre 10 degrés et 30 degrés.

7. Corps de rotation (1) selon une des revendications précédentes,
**caractérisé en ce**
**que** le corps de rotation (1) possède une épaisseur totale (D) perpendiculairement à l'axe de rotation prévu (R) du corps de rotation (1), dans lequel l'épaisseur (D1) du premier corps (2) en dehors des régions de coupe (23) n'est pas supérieure à 50 % de l'épaisseur totale (D), de préférence pas supérieure à 35 % de l'épaisseur totale (D).

8. Corps de rotation (1) selon une des revendications précédentes,
**caractérisé en ce**
**que** le corps de rotation (1) possède une épaisseur totale (D) perpendiculairement à l'axe de rotation prévu (R) du corps de rotation qui est constante sur le corps de rotation entier (1) le long de l'axe de rotation prévu (R).

9. Rotor (10) avec un corps de rotation (1) selon la revendication 1 et un ou plusieurs composants de transmission de force (11) qui sont connectés de manière appropriée au corps de rotation (1) pour la variation de l'énergie de rotation du corps de rotation (1), dans lequel les composants de transmission de force (11) sont chacun logés de manière appropriée par le biais d'un arbre (12) ou tourillon (12) et au moins un des arbres (12) ou tourillons (12) peut être entraîné de manière au moins appropriée par le biais d'un moteur (13).

10. Accumulateur cinétique (100) avec un ou plusieurs rotors (10) entourés chacun par un logement de machine selon la revendication 9, dans lequel le rotor (10) peut être accéléré par le biais d'un module de moteur-générateur (13) pour l'accumulation d'énergie électrique et freiné pour la libération d'énergie électrique.

11. Procédé de fabrication d'un corps de rotation (1) selon la revendication 1, comprenant les étapes de :
(a) fabrication (HG) d'un corps de base (G) de forme creuse au moins partiellement en matériau composite fibreux sans région de coupe avec un côté interne (2i) orienté vers l'axe de rotation prévu (R) et un côté externe opposé (2a) sur un premier corps d'enroulement (W1) au moyen d'un procédé d'enroulement approprié ;
(b) solidification (V1) du matériau composite fibreux du corps de base et retrait (E1) du premier corps d'enroulement (W1) du corps de base ;
(c) découpage (Z) du corps de base (G) aux première et/ou seconde extrémités souhaitées (21, 22) du premier corps (1) pour la fabrication du premier corps (2) avec une longueur souhaitée (L), par lequel des faces de coupe (24) sont générées sur le premier corps (1) dans les régions de coupe (23) chacune délimitées aux première et/ou seconde extrémités (21, 22) qui rétrécissent du côté externe (2a) au côté interne (2i) vers l'extrémité respective (21, 22) ;
(d) serrage (ES) du premier corps dans un second corps d'enroulement (W2) configuré en tant que cavité ;
(e) fabrication (HR) du corps de rotation (1) au moyen de l'enveloppement du premier corps (2) avec une couche périphérique (U2) en un second matériau composite fibreux en fibres (F2) avec un sens de fibres le long d'un angle de fibres (FW2) avec plus de 80 degrés par rapport à l'axe de rotation prévu (R) du corps de rotation (1) pour la formation d'un second corps (3) de sorte que le second corps (3) recouvre au moins toutes les régions de coupe (23) du côté externe (2a) du premier corps (2), vues au moins perpendiculairement à l'axe de rotation (R) ; et
(f) solidification (V2) du second matériau composite fibreux et retrait (E2) du second corps d'enroulement (W2).

12. Procédé selon la revendication 11, dans lequel une étape supplémentaire de la préparation (VA) du côté externe du premier corps (2) pour les étapes de procédé subséquentes s'effectue entre les étapes (b) et (d), de préférence au moyen du grattage du côté externe ou au moyen du retrait d'un tissu déchirable.

13. Procédé selon la revendication 11 ou 12, dans lequel l'étape de la fabrication (HG) du corps de base comprend les étapes d'un enroulement d'au moins une couche hélicoïdale (H1) en fibres (F1H) avec un sens de fibres le long d'un angle de fibres (FW1H) inférieur à 50 degrés par rapport à l'axe de rotation (R) et un enroulement supplémentaire d'une ou plusieurs couches périphériques (U1) en fibres (F1U) avec un sens de fibres le long d'un angle de fibres (FW1U) supérieur à 80 degrés par rapport à l'axe de rotation (R) sur la couche hélicoïdale (H1), l'enroulement est de préférence réalisé de sorte qu'une des couches périphériques (U1) est disposée sur le côté externe (2a) du corps de base (G).

14. Procédé selon une des revendications 11 à 13, dans lequel l'étape de la fabrication (HR) du corps de rotation (1) est réalisée au moyen de l'enveloppement du premier corps (2) de sorte que le corps de rotation ainsi fabriqué (1) possède une épaisseur totale (D) perpendiculairement à l'axe de rotation prévu (R) du corps de rotation (1), dans lequel l'épaisseur (D1) du premier corps (2) n'est pas supérieure à 50 % de l'épaisseur totale (D), de préférence pas supérieure à 35 % de l'épaisseur totale (D), l'enveloppement est en l'occurrence de préférence réalisé de sorte que l'épaisseur totale (D) est constante sur le corps de rotation entier (1) le long de l'axe de rotation prévu (R).

15. Procédé selon une des revendications 11 à 14, dans lequel le second corps d'enroulement (W2) possède une longueur (LW2) qui ne dépasse pas de plus de quelques millimètres au-delà des première et/ou seconde extrémités (21, 22) du premier corps (2) de sorte que l'enveloppement du premier corps (2) est réalisé de sorte que le premier corps (2) est enveloppé au-delà de ses première et/ou seconde extrémités (21, 22) parallèlement à l'axe de rotation prévu (R).
